# NEUE EUROPÄISCHE PATENTSCHRIFT

(11) **EP 3 964 300 B2**
(45) Veröffentlichungstag und Bekanntmachung des Hinweises auf die Entscheidung über den Einspruch: **17.06.2026**
(45) Hinweis auf die Patenterteilung: 22.03.2023
(21) Anmeldenummer: 20194537.5
(22) Anmeldetag: 04.09.2020
(51) Int. Cl.: B05D 5/08, B05D 7/00, B05D 1/26, B05D 3/02, B05D 7/14, B05D 1/42, A47J 36/02

(54) **VERFAHREN ZUR HERSTELLUNG EINER FLUORFREIEN ANTIHAFTBESCHICHTUNG**
METHOD FOR THE PRODUCTION OF A FLUORINE-FREE ANTIADHESIVE COATING
PROCÉDÉ DE FABRICATION D'UN REVÊTEMENT ANTIADHÉSIF SANS FLUOR

(43) Veröffentlichungstag der Anmeldung: 09.03.2022
(73) Patentinhaber: Industrielack AG, 8855 Wangen SZ (CH)
(72) Erfinder: Brand, Jörg, 8868 Oberurnen (CH); Geisel, Hans Georg, 8854 Siebnen (CH); Raisch, Stephanie, 8834 Schindellegi (CH); Huber, Remo, 8854 Siebnen (CH)
(74) Vertreter: Schmauder & Partner AG Patent- & Markenanwälte VSP

(56) Entgegenhaltungen:
- EP-B1- 2 319 631
- CH-A2- 709 779
- US-A- 5 721 053
- US-A1- 2008 311 382
- US-A1- 2017 130 060

## Beschreibung

### Technisches Gebiet

Die vorliegende Erfindung betrifft ein Verfahren zur Herstellung einer fluorfreien Antihaftbeschichtung.

### Stand der Technik

Aus dem Stand der Technik sind Antihaftbeschichtungen auf Basis von Fluorpolymeren seit langem bekannt, beispielsweise für die Beschichtung von Backformen. Polytetrafluorethylen (PTFE) ist hierbei ein sehr häufig eingesetztes Fluorpolymer. PTFE-Beschichtungen besitzen aufgrund ihrer geringen Oberflächenenergie sehr gute Antihaft-Eigenschaften und aufgrund der hohen C-F Bindungsenergien hohe Temperaturbeständigkeiten.

Backformen werden meist durch einen Bandbeschichtungsprozess und anschliessendes Umformen (Tiefziehen) hergestellt.

Neben den guten Antihaft-Eigenschaften zeigen PTFE-Beschichtungen grundsätzlich geringe Reibkoeffizienten, was sich vorteilhaft auf die Tiefziehfähigkeit solcher Beschichtungen auswirkt. Ohne die Trockenschmierwirkung des PTFE beim Umformprozess reisst das Blech beim Tiefziehen.

Neben den oben genannten Vorteilen besitzen Fluorpolymer-Beschichtungen jedoch eine Reihe von Nachteilen. PTFE kann aufgrund der extrem hohen Schmelzviskosität nur bei sehr hohen Temperaturen verarbeitet werden. Die verwendeten Einbrenntemperaturen liegen hierbei um 420 °C. Diese Verarbeitungstemperatur liegt oberhalb der Zersetzungstemperatur des PTFE, wodurch giftige und aggressive Zersetzungsprodukte (wie z.B. Trifluoressigsäure und Fluorphosgen) freigesetzt werden (Nature, Vol. 412, 19, July 2001, p. 321-324). Bei der Herstellung von Fluorpolymeren werden zudem häufig Fluor-haltige Netzmittel eingesetzt, die sich aufgrund der fehlenden Bioabbaubarkeit in der Natur anreichern können und auch die Gesundheit des Menschen und der Umwelt gefährden können.

Beim Tiefziehprozess von PTFE-Beschichtungen kann es zudem zu einem unerwünschten oberflächlichen Abrieb der Beschichtung kommen, der am späteren Artikel sichtbar ist, insbesondere wenn der Gehalt von weichem PTFE an der Oberfläche hoch ist.

Fluorfreie Antihaft-Beschichtungen sind aus dem Stand der Technik ebenfalls bekannt.

Silikonmodifizierte Polyester, bei denen ein Teil des Polyesters durch Silikone modifiziert ist, zeigen oft mangelnde Temperaturbeständigkeiten, da der Polyester-Anteil bei hohen Temperaturen (>230 °C) leicht verbrennt. Um eine ausreichende Tiefziehfähigkeit des Silikonmodifizierten Polyesters zu erreichen, muss der Anteil der Silikonmodifizierung tief gehalten werden, damit eine für den Tiefziehprozess ausreichende Substrathaftung und Flexibilität erreicht werden kann. Dies wirkt sich nachteilig auf den Antihafteffekt und die Temperaturstabilität aus. Aus diesem Grund werden Silikonmodifizierte Polyester ausschliesslich in Sprühapplikationen eingesetzt und nicht in den wesentlich effizienteren Bandbeschichtungsverfahren.

Schliesslich sind aus dem Stand der Technik fluorfreie Antihaftbeschichtungen bekannt wie z.B. aus EP 2 177 580 B1, die im Sol-Gel Verfahren hergestellt werden. Diese Beschichtungen sind sehr temperaturbeständig, sind aber zugleich sehr hart und spröde. Diese häufig auch als keramische Beschichtungen bezeichneten Antihaftbeschichtungen eignen sich aufgrund ihrer Sprödigkeit deshalb ebenfalls nicht für Bandbeschichtungsverfahren mit anschliessendem Umformprozess.

In EP 2 450 469 B1 wird zwar ein Herstellverfahren beschrieben, bei dem eine Sol-Gel Beschichtung auf ein Substrat aufgebracht wird, bei 70110 °C während 6 bis 8 Minuten getrocknet wird, dann umgeformt wird und anschliessend vollständig vernetzt wird. Die vorgetrocknete Beschichtung ist aber für industrielle Bandbeschichtungsverfahren nicht geeignet, da die vorgetrocknete Beschichtung sehr anfällig für mechanische Beschädigungen ist und die Vortrockenbedingungen schwer zu kontrollieren sind.

US20200216669A1 beschreibt eine fluorfreie Sol-Gel Beschichtungszusammensetzung, die zusätzlich ein thermoplastisches Polymer (wie z.B. PPS) umfasst, das einen Schmelzpunkt oder eine Glasübergangstemperatur von 200 °C oder mehr besitzt. Dadurch wird eine verbesserte Schlagfestigkeit erreicht. Die erreichte Flexibilität der Beschichtung ist für einen Tiefziehprozess jedoch viel zu gering.

EP 2 319 631 B1 beschreibt eine Beschichtung für ein Substrat, mit einer Grundschicht auf dem Substrat, wobei die Grundschicht eine Bindematrix, die ausgewählt ist aus der Gruppe bestehend aus Silikonharz, Titanat, Zirkonat und Mischungen derselben, umfasst, wobei die Bindematrix einen Anteil von 0,5 bis 20 Gew.-%, bezogen auf das Gewicht der Grundschicht, eines thermoplastischen Kunststoffs enthält, der eine Temperaturbeständigkeit von über 200°C aufweist. Die Grundschicht ist frei von Fluorpolymeren und bei einer Temperatur zwischen 150 °C und 230 °C getempert, wobei auf der Grundschicht eine Deckschicht angeordnet ist, die eine Bindematrix mit einem kleineren Anteil eines thermoplastischen Kunststoffs als die Grundschicht enthält. Der Anteil des thermoplastischen Kunststoffs in der Bindemittelmatrix ist hierbei mit bis zu 20 Gew.-% recht gering, und die Beschichtung wird nur bei bis zu 230 °C getempert, um eine Zersetzung des Silikonharzes zu vermeiden.

US 5 721 053 A beschreibt eine zweilagige Antihaftbeschichtung auf der Basis eines im vorliegenden Zusammenhang unerwünschten Perfluorharzes.

US 2017/130060 A1 beschreibt eine zweilagige Pulverbeschichtung, welche durch trockenes Vermahlen der Inhaltsstoffe entsteht. Sowohl die erste als auch die zweite Schicht enthält ein thermoplastisches Polymer sowie keramische Partikel, welche für die tribologischen Eigenschaften der Beschichtungen entscheidend sind.

CH 709 779 A2 beschreibt eine Lackdispersion für die Herstellung einer Antihaftschicht, welche keine Thermoplaste enthält, sondern auf der Basis von Polysilazanen aufgebaut ist. Polysilazane liefern nach Hydrolyse Ammoniak und hochvernetzte spröde Schichten, die für einen Tiefziehprozess nicht flexibel genug wären.

Aus dem Stand der Technik sind auch Silikonelastomere und Silikonharze bekannt, die als Antihaftwerkstoffe eingesetzt werden. Diese haben allerdings den Nachteil, dass sie nur eine geringe Haftung zum Substrat aufbauen und deshalb für einen nachgelagerten Umformprozess nicht geeignet sind. Die temperaturbeständigen Silikonharze sind zusätzlich sehr spröde und zeigen nur auf mechanisch aufgerauten Oberflächen ausreichende Haftung.

### Darstellung der Erfindung

Der vorliegenden Erfindung liegt die Aufgabe zugrunde, ein Verfahren zum Aufbringen einer Antihaftbeschichtung anzugeben.

Gelöst wird diese Aufgabe durch das im Anspruch 1 definierte Verfahren.

Es wird ein beschichteter Artikel mit einer Oberfläche beschrieben, welche mit einer nach dem erfindungsgemässen Verfahren aufgebrachten Antihaftbeschichtung versehen ist. Dabei kann es sich insbesondere um eine Backform oder einen anderen Haushalts- und Gebrauchsgegenstand handeln.

Beim erfindungsgemässen Verfahren zum Aufbringen einer Antihaftbeschichtung für einen Artikel, wobei die Antihaftbeschichtung zumindest eine auf eine Oberfläche (O) des Artikels eingebrannte Grundschicht (G) und eine über der Grundschicht eingebrannte Deckschicht (D) aufweist, wobei die Grundschicht eine Trockenfilmschichtdicke von 3 bis 4 µm aufweist, und wobei die Deckschicht eine Trockenfilmschichtdicke von 3 bis 4 µm aufweist, wobei die Grundschicht 10 bis 100 Gew.-%, bezogen auf das Gewicht der eingebrannten Grundschicht, eines thermoplastischen Kunststoffs mit einer Temperaturbeständigkeit von über 200 °C enthält, wobei die Deckschicht einen thermoplastischen Kunststoff mit einer Temperaturbeständigkeit von über 200 °C und optional ein Silikonharz enthält,und wobei die Grundschicht und die Deckschicht frei von per- und polyfluorierten Alkylverbindungen sind, wobei der in der Grund- und Deckschicht enthaltene thermoplastische Kunststoff unabhängig ausgewählt ist aus der Gruppe bestehend aus Polyethersulfon (PES), Polyphenylenethersulfon (PPSU), flüssig kristallinem Polymer (LCP), Polyaryletherketon, Polyetherketon (PEK), Polyetheretherketon (PEEK), Polyetherketonketon (PEKK), Polyphenylensulfid (PPS) und Mischungen derselben, wobei die Deckschicht einen Gehalt an thermoplastischem Kunststoff von mindestens 30 Gew.-%, bezogen auf das Gewicht der eingebrannten Deckschicht, sowie mindestens 2.5 Gew.-%, bezogen auf das Gewicht der eingebrannten Deckschicht, eines Silikonöls aufweist, wird die zu bildende Grundschicht als flüssiger Lack auf die Oberfläche des Artikels aufgebracht und anschliessend bei 250 bis 440 °C getrocknet, wobei anschliessend die Deckschicht als flüssiger Lack auf die vorgetrocknete Grundschicht aufgebracht wird und die Schichten durch anschliessende Wärmebehandlung bei 250 bis 440°C miteinander und mit der Oberfläche des Gegenstandes verbunden werden, wobei die zur Bildung der Grund- und Deckschicht verwendeten Lacke durch ein Bandbeschichtungsverfahren aufgebracht werden und wobei die Antihaftbeschichtung nach dem Einbrennen durch Tiefziehen umgeformt wird.

Die Bezeichnungen "eingebrannte Grundschicht" und "eingebrannte Deckschicht" sind dahingehend zu verstehen, dass zur Herstellung der besagten Schichten eine entsprechende Wärmebehandlung bei einer Temperatur zwischen 250 und 440 °C erfolgte.

Durch das erfindungsgemässe Verfahren lassen sich gegenüber dem Stand der Technik neuartige fluorfreie Antihaftbeschichtungen mit guter Haftung auf ECCS (Electrolytic chromium/chromium oxide coated steel) und sehr guter Tiefziehfähigkeit erhalten, die in Backtests in Kombination mit Geschirrspülreinigung gegenüber PTFE-haltigen Antihaftbeschichtungen ein verbessertes Reinigungs- und Entformungsverhalten des Testkuchens zeigen.

Überraschenderweise hat sich gezeigt, dass die Deckschicht mit nur 2.5 Gew.-% eines Silikonöls bereits sehr gut tiefziehfähige Beschichtungen liefert, die ohne die Verwendung eines Trockenschmiermittels wie PTFE auskommen, ohne zu reissen. Die tiefgezogenen Oberflächen zeigen keinen unerwünschten oberflächlichen Abrieb der Beschichtung durch die Umformwerkzeuge, der am späteren Artikel sichtbar ist, wie dies bei PTFE-haltigen Antihaftbeschichtungen manchmal der Fall ist.

Weiter hat sich überraschenderweise gezeigt, dass selbst hohe Einbrenntemperaturen zwischen 250 und 440 °C die Antihaftwirkung der verwendeten Silikone in der Antihaftbeschichtung nicht negativ beeinflussen.

Vorteilhafte Ausgestaltungen der Erfindung sind in den abhängigen Ansprüchen angegeben.

Grundsätzlich sind für die erfindungsgemässe Anwendung verschiedene Silikonöle verfügbar und auch im Handel erhältlich. Insbesondere kann es sich dabei um reaktive oder um nicht reaktive Silikonöle handeln. Für die vorgesehenen Anwendungen im Lebensmittelbereich soll das in der Deckschicht enthaltene Silikonöl eine kinematische Viskosität bei 20 °C von mindestens 100 mm²s⁻¹ aufweisen (Anspruch 2). Gemäss einer Ausführungsform wird als Silikonöl ein α,ω-Hydroxyterminiertes Polydimethylsiloxan verwendet.

Vorteilhaft ist es, wenn die Deckschicht zusätzlich ein oder mehrere Silikonharze enthält (Anspruch 3). Als Silikonharze kommen insbesondere Methylsilikonharze und/oder Phenylsilikonharze und/oder Methyl-Phenylsilikonharze in Frage (Anspruch 4).

Der in der Grund- und Deckschicht enthaltene thermoplastische Kunststoff ist unabhängig ausgewählt aus der Gruppe bestehend aus Polyethersulfon (PES), Polyphenylenethersulfon (PPSU), flüssig kristallinem Polymer (LCP), Polyaryletherketon, Polyetherketon (PEK), Polyetheretherketon (PEEK), Polyetherketonketon (PEKK), Polyphenylensulfid (PPS) und Mischungen derselben. Ein für die vorliegende Erfindung besonders vorteilhafter thermoplastischer Kunststoff ist PES (Anspruch 5).

Bei gewissen Ausführungsformen enthält die Grundschicht und/oder die Deckschicht mindestens einen Zusatz welcher ausgewählt ist aus der Gruppe bestehend aus Pigmenten, Füllstoffen und metallischen Partikeln (Anspruch 6). Hierbei kann es sich insbesondere um Aluminiumflocken (sog. "Flakes"), Glimmer oder Russ handeln. Es gibt aber auch Ausführungsformen, bei denen die Grundschicht und/oder die Deckschicht pigment- und partikelfrei sind.

In manchen Ausgestaltungen wird für die Grundschicht und für die Deckschicht derselbe thermoplastische Kunststoff, beispielsweise PES verwendet. Für gewisse Anwendungen kann jedoch vorgesehen sein, dass die Deckschicht einen anderen thermoplastischen Kunststoff als die Grundschicht enthält (Anspruch 7).

Bei einer Ausführungsform des erfindungsgemässen Verfahrens enthält der zur Bildung der Grundschicht oder der Deckschicht verwendete Lack den thermoplastischen Kunststoff in Form einer Dispersion (Anspruch 8).

Bei einer weiteren Ausführungsform enthält der zur Bildung der Grundschicht oder der Deckschicht verwendete Lack den thermoplastischen Kunststoff in gelöster Form (Anspruch 9).

Grundsätzlich kann das erfindungsgemässe Verfahren für Artikel mit verschiedenen Typen von Oberflächen angewendet werden. Bei einer vorteilhaften Ausführungsform ist die Oberfläche des Artikels metallisch (Anspruch 10).

### Kurze Beschreibung der Figuren

Ausführungsbeispiele der Erfindung werden nachfolgend anhand der Zeichnungen näher beschrieben, dabei zeigen:
- Fig. 1: einen Schichtaufbau einer erfindungsgemäss hergestellten Antihaftbeschichtung, als schematische Schnittdarstellung;

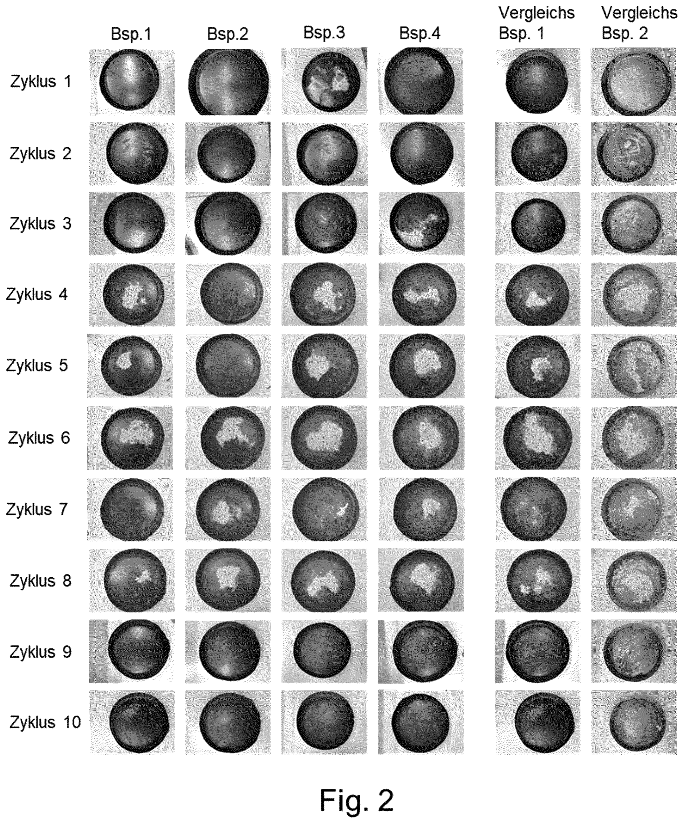

- Fig. 2: Rundformen der Ausführungsbeispiele 1-4 und der Vergleichsbeispiele 1 und 2, jeweils nach einer bestimmten Anzahl Backzyklen (Reinigung im Geschirrspüler nach Zyklus 1, 3, 5, 7 und 9).

### Wege zur Ausführung der Erfindung

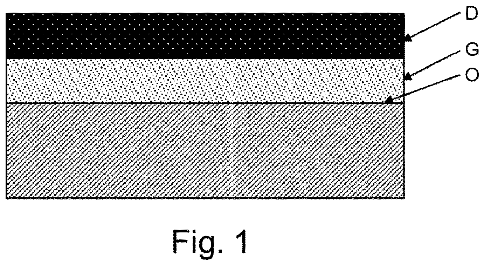

Die in der Figur 1 dargestellte Antihaftbeschichtung für die Oberfläche O eines Artikels, bei dem es sich beispielsweise um eine Backform handelt, weist eine auf einer Oberfläche O eingebrannte Grundschicht G sowie eine über der Grundschicht G eingebrannte Deckschicht D auf.

### Beispiele

Gemäss einem besonders bevorzugten Ausführungsbeispiel 1 weist eine Antihaftbeschichtung, insbesondere für Backgeschirr zwei Schichten auf, nämlich eine Deckschicht mit einer Trockenfilmschichtstärke von 3 bis 4 µm und eine Grundschicht mit einer Trockenfilmschichtstärke von 3 bis 4 µm.

Die Grundschicht in diesem besonders bevorzugten Ausführungsbeispiel 1 enthält 85.1 Gew.-% Polyethersulfon, 8 Gew.-% Aluminiumflakes, 4.3 Gew.-% Glimmer und 2.6 Gew.-% Russ.

Die Deckschicht in diesem besonders bevorzugten Ausführungsbeispiel 1 enthält 72.5 Gew.-% Polyethersulfon, 10.4 Gew.-% eines Methyl-Phenyl-Silkonharzes, 1.3 Gew.-% eines Methylsilikonharzes, 3.1 Gew.-% eines Silikonöls bestehend aus einem α,ω-Hydroxyterminierten Polydimethylsiloxan, 6.9 Gew.-% Aluminiumflakes, 3.6 Gew.-% Glimmer und 2.2 Gew.-% Russ.

Die Grundschicht wird flüssig auf ein fettfreies ECCS-Blech mit 0.29 mm Dicke mit einer Rakel aufgebracht und 30 Sekunden bei 150 °C und anschliessend 1 Minute bei 420 °C eingebrannt und auf Raumtemperatur abgekühlt. Die Deckschicht wird auf die getrocknete Grundschicht mit einer Rakel aufgebracht und 30 Sekunden bei 150 °C und anschliessend 1 Minute bei 320 °C eingebrannt.

Gemäss einem anderen Ausführungsbeispiel 2 weist eine Antihaftbeschichtung, insbesondere für Backgeschirr zwei Schichten auf, nämlich eine unpigmentierte Deckschicht mit einer Trockenfilmschichtstärke von 3 bis 4 µm und eine Grundschicht mit einer Trockenfilmschichtstärke von 3 bis 4 µm.

Die Grundschicht in diesem Ausführungsbeispiel 2 enthält 85.1 Gew.-% Polyethersulfon, 8 Gew.-% Aluminiumflakes, 4.3 Gew.-% Glimmer und 2.6 Gew.-% Russ.

Die Deckschicht in diesem Ausführungsbeispiel 2 enthält 85 Gew.-% Polyethersulfon, 11.5 Gew.-% eines Methyl-Phenyl-Silkonharzes und 3.5 Gew.-% eines Silikonöls bestehend aus einem α,ω-Hydroxyterminierten Polydimethylsiloxan.

Die Grundschicht wird flüssig auf ein fettfreies ECCS-Blech mit 0.29 mm Dicke mit einer Rakel aufgebracht und 30 Sekunden bei 150 °C und anschliessend 1 Minute bei 420 °C eingebrannt und auf Raumtemperatur abgekühlt. Die Deckschicht wird auf die getrocknete Grundschicht mit einer Rakel aufgebracht und 30 Sekunden bei 150 °C und anschliessend 1 Minute bei 320 °C eingebrannt.

Gemäss einem weiteren Ausführungsbeispiel 3 weist eine Antihaftbeschichtung, insbesondere für Backgeschirr zwei Schichten auf, nämlich eine Deckschicht mit einer Trockenfilmschichtstärke von 3 bis 4 µm und eine Grundschicht mit einer Trockenfilmschichtstärke von 3 bis 4 µm.

Die Grundschicht in diesem Ausführungsbeispiel 3 enthält 85.1 Gew.-% Polyethersulfon, 8 Gew.-% Aluminiumflakes, 4.3 Gew.-% Glimmer und 2.6 Gew.-% Russ.

Die unpigmentierte Deckschicht in diesem Ausführungsbeispiel 3 enthält 96.1 Gew.-% Polyethersulfon und 3.9 Gew.-% eines Silikonöls bestehend aus einem α,ω-Hydroxyterminierten Polydimethylsiloxan.

Die Grundschicht wird flüssig auf ein fettfreies ECCS-Blech mit 0.29 mm Dicke mit einer Rakel aufgebracht und 30 Sekunden bei 150 °C und anschliessend 1 Minute bei 420 °C eingebrannt und auf Raumtemperatur abgekühlt. Die Deckschicht wird auf die getrocknete Grundschicht mit einer Rakel aufgebracht und 30 Sekunden bei 150 °C und anschliessend 1 Minute bei 320 °C eingebrannt.

Gemäss einem weiteren Ausführungsbeispiel 4 weist eine Antihaftbeschichtung, insbesondere für Backgeschirr zwei Schichten auf, nämlich eine Deckschicht mit einer Trockenfilmschichtstärke von 3 bis 4 µm und eine Grundschicht mit einer Trockenfilmschichtstärke von 3 bis 4 µm.

Die Grundschicht in diesem Ausführungsbeispiel 4 enthält 85.1 Gew.-% Polyethersulfon, 8 Gew.-% Aluminiumflakes, 4.3 Gew.-% Glimmer und 2.6 Gew.-% Russ.

Die Deckschicht in diesem Ausführungsbeispiel 4 enthält 80.9 Gew.-% Polyethersulfon, 7.7 Gew.-% Aluminiumflakes, 4.1 Gew.-% Glimmer, 2.5 Gew.-% Russ, 1.4 Gew.-% eines Methylsilikonharzes und 3.5 Gew.-% eines Silikonöls bestehend aus einem α,ω-Hydroxyterminierten Polydimethylsiloxan.

Die Grundschicht wird flüssig auf ein fettfreies ECCS-Blech mit 0.29 mm Dicke mit einer Rakel aufgebracht und 30 Sekunden bei 150 °C und anschliessend 1 Minute bei 420 °C eingebrannt und auf Raumtemperatur abgekühlt. Die Deckschicht wird auf die getrocknete Grundschicht mit einer Rakel aufgebracht und 30 Sekunden bei 150 °C und anschliessend 1 Minute bei 320 °C eingebrannt.

Vergleichsbeispiel 1 ist eine einschichtige Fluorpolymerhaltige Antihaftbeschichtung mit folgender Zusammensetzung: 77.8 Gew.-% Polyethersulfon, 3.9 Gew-% Glimmer, 2.3 Gew.-% Russ, 8.6 Gew.-% PTFE, 7.4 Gew.-% Aluminiumflakes.

Die Schicht wird flüssig auf ein fettfreies ECCS-Blech mit 0.29 mm Dicke mit einer Rakel aufgebracht und 30 Sekunden bei 150 °C und anschliessend 1 Minute bei 420 °C eingebran nt.

Vergleichsbeispiel 2 ist eine einschichtige Antihaftbeschichtung eines modifizierten Silikonpolyesters mit folgender Zusammensetzung: 70.6 Gew.-% eines Silikonmodifizierten Polyesters, 2 Gew.-% einer pyrogenen Kieselsäure, 2 Gew.-% eines Rheologieadditivs aus organisch modifiziertem Bentonit Ton, 0.1 Gew.-% Russ, 1.5 Gew.-% eines Ultramarin Pigments, 16.1 Gew.-% eines Bariumsulfat Füllstoffs, 4.1 Gew.-% Aluminiumflakes und 3.9 Gew.-% eines unreaktiven Silikonöls.

Für den unten beschriebenen kombinierten Back- und Geschirrspültest des Vergleichsbeispiels 2 wurde zuerst eine Rundform aus fettfreiem ECCS-Blech mit 0.29 mm Dicke gepresst und anschliessend im Sprühverfahren lackiert, 30 Sekunden bei 150 °C und anschliessend 1 Minute bei 420 °C eingebrannt, da diese Beschichtung nicht tiefziehfähig ist.

Eigenschaften der Beschichtungen:
Von den eingebrannten erfindungsgemäßen Antihaftbeschichtungen wurden mit Hilfe einer Erichsen Tiefziehprüfmaschine Modell 212 quadratische Näpfchen 26 x 26 mm ca. 60 mm (# 05030132) gezogen (Blechhaltekraft 8-9 kN, Ziehgeschwindigkeit 4-5, Ziehstempelweg ca. 60 mm, Ziehkraft max. 11 kN), um die Tiefziehfähigkeit zu beurteilen. Die beim Tiefziehen mit dem Blech in Kontakt kommenden Flächen der Tiefziehprüfmaschine wurden zuvor mit Ethylacetat entfettet.

Hierbei wurden bei allen erfindungsgemässen Antihaftbeschichtungen keine Ablösungen oder Haftungsverluste festgestellt. Ausserdem wurden auf keinen der erfindungsgemässen Antihaftbeschichtungen oberflächliche farbliche Veränderungen oder Abschabungen nach der Umformung beobachtet. Somit sind alle erfindungsgemässen Antihaftbeschichtungen sehr gut tiefziehfähig.

Kombinierter Back- und Geschirrspültest:
Zusätzlich wurden von den erfindungsgemäßen Ausführungsbeispielen und den Vergleichsbeispielen Rundformen mit 22.5 cm Durchmesser und 4 cm Tiefe gepresst um einen Backtest in Kombination mit Geschirrspülreinigung durchführen zu können.

Für den Testkuchen wurde folgende Teigrezeptur verwendet:
200g Butter, 200g Zucker, 1 Prise Vanillezucker und 1 Prise Salz werden zusammen cremig gerührt. Nach und nach werden unter Rühren 4 Eier, 300 g Mehl und 3 Teelöffel Backpulver zugegeben. Alle Zutaten werden zu einem einheitlichen Teiggemisch verrührt.

Ein Umluft-Ofen wird auf 180°C vorgeheizt. 200g Kuchenteig werden in die ungefettete Rundform gefüllt und gleichmäßig in der Form verteilt. Der Teig wird 20 Minuten gebacken. Die Backform wird aus dem Ofen genommen und 8 Minuten abgekühlt. Die Backform wird umgedreht und der Kuchen entformt. Eventuell ist es hierfür nötig, die Form umgedreht auf den Tisch fallen zu lassen. Es wird notiert, wie sich der Kuchen entformen lässt. Auch die Menge an noch vorhandenen Rückständen wird notiert. Anschließend wird die Backform mit Spülmittel von Hand gewaschen und gut abgetrocknet. Die Reinigungsfähigkeit wird beurteilt und notiert.

Insgesamt werden 10 Zyklen gebacken, wobei nach dem 1., 3., 5., 7. und 9 Zyklus eine Reinigung im Geschirrspüler durchgeführt wird. Nach jedem Zyklus wird ein Bild von der Rundform nach der Entformung des Kuchens gemacht.

Bei der Bewertung der Entformung des Kuchens und der Reinigungsfähigkeit der Rundform nach den einzelnen Zyklen können maximal 10 Punkte pro Zyklus vergeben werden, was nach 10 Zyklen maximal 100 Punkte ergibt. Wobei die Entformung des Kuchens mit einem Faktor 0.6 und die Reinigungsfähigkeit der Rundform mit einem Faktor 0.4 gewichtet wird.

Die Entformung des Kuchens wird wie folgt bewertet:
Kein Anhaften, der Kuchen entformt sehr einfach, 0-5% Rückstände ergibt 10 Punkte Vereinzeltes Anhaften, Kuchen entformt einfach, 5-20% Rückstände ergibt 7.5 Punkte Starkes Anhaften, Kuchen lässt sich entformen, 20-40% Rückstände ergibt 5.0 Punkte Starkes Anhaften, Kuchen lässt sich nur mit Teigschaber entformen ergibt 2.5 Punkte

Die Reinigungsfähigkeit der Rundform wird wie folgt bewertet:
Keine Rückstände ergibt 10 Punkte
leicht (leichter Druck) ergibt 7.5 Punkte
moderat (mittlerer Druck) ergibt 5.0 Punkte
Reinigungsschwamm nötig ergibt 2.5 Punkte

Tabelle 1 zeigt die Bewertung der einzelnen Zyklen des kombinierten Back- und Geschirrspültests der untersuchten erfindungsgemäßen Ausführungsbeispiele und der Vergleichsbeispiele.

Wie sich in weiteren Versuchen zeigte, ist das Vorhandensein von mindestens 2.5 Gew.-% eines Silikonöls bezogen auf das Gewicht der eingebrannten Deckschicht nötig, um die Tiefziehfähigkeit der erfindungsgemäßen Antihaftbeschichtungen zu gewährleisten.

Weiterhin zeigt Tabelle 1, dass selbst ohne das zusätzliche Vorhandensein eines Silikonharzes in der Deckschicht (Ausführungsbeispiel 3 und 4) im kombinierten Back- und Reinigungstest durchschnittlich gute Ergebnisse erzielt werden können, die mit den beiden Vergleichsbeispielen 1 und 2 des Standes der Technik durchaus vergleichbar sind.

Durch den Zusatz von Silikonharzen in der erfindungsgemässen Deckschicht lässt sich das Ergebnis des kombinierten Back- und Reinigungstests erheblich verbessern.

**Tabelle 1**

| | | Zyklus 1 | Zyklus 2 | Zyklus 3 | Zyklus 4 | Zyklus 5 | Zyklus 6 | Zyklus 7 | Zyklus 8 | Zyklus 9 | Zyklus 10 | Zwischentotal | Gewichtung | **Total** | **Summe Total** |
|---|---|---|---|---|---|---|---|---|---|---|---|---|---|---|---|
| Bsp. 1 | Entformung | 10 | 7.5 | 10 | 5 | 7.5 | 5 | 10 | 7.5 | 10 | 5 | 77.5 | 0.6 | 46.5 | |
| | Reinigung | 10 | 7.5 | 10 | 7.5 | 7.5 | 7.5 | 7.5 | 7.5 | 7.5 | 7.5 | 80.0 | 0.4 | 32.0 | 78.5 |
| Bsp. 2 | Entformung | 10 | 5 | 10 | 7.5 | 10 | 5 | 5 | 5 | 7.5 | 5 | 70.0 | 0.6 | 42.00 | |
| | Reinigung | 10 | 7.5 | 10 | 7.5 | 7.5 | 7.5 | 7.5 | 5 | 5 | 7.5 | 75.0 | 0.4 | 30.00 | 72 |
| Bsp. 3 | Entformung | 2.5 | 7.5 | 2.5 | 2.5 | 5 | 2.5 | 2.5 | 2.5 | 5 | 2.5 | 35.0 | 0.6 | 21.00 | |
| | Renigung | 5 | 5 | 5 | 5 | 5 | 5 | 2.5 | 5 | 5 | 5 | 47.5 | 0.4 | 19.00 | 40 |
| Bsp. 4 | Entformung | 10 | 7.5 | 2.5 | 2.5 | 5 | 2.5 | 2.5 | 2.5 | 5 | 2.5 | 42.5 | 0.6 | 25.50 | |
| | Reinigung | 10 | 5 | 5 | 5 | 5 | 5 | 2.5 | 2.5 | 5 | 5 | 50.0 | 0.4 | 20.00 | 45.5 |
| Vergleichs Bsp. 1 | Entformung | 10 | 5 | 7.5 | 2.5 | 5 | 2.5 | 2.5 | 2.5 | 5 | 5 | 47.5 | 0.6 | 10 | |
| | Reinigung | 10 | 7.5 | 5 | 5 | 5 | 5 | 2.5 | 5 | 5 | 7.5 | 57.5 | 0.4 | 10 | 51.5 |
| Vergleichs Bsp. 2 | Entformung | 10 | 5 | 5 | 2.5 | 2.5 | 2.5 | 2.5 | 2.5 | 5 | 2.5 | 40.0 | 0.6 | 10 | |
| | Reinigung | 10 | 5 | 5 | 5 | 2.5 | 2.5 | 2.5 | 2.5 | 5 | 5 | 45.0 | 0.4 | 10 | 42 |

## Patentansprüche

1. Verfahren zum Aufbringen einer Antihaftbeschichtung für einen Artikel, wobei die Antihaftbeschichtung zumindest eine auf eine Oberfläche (O) des Artikels eingebrannte Grundschicht (G) und eine über der Grundschicht eingebrannte Deckschicht (D) aufweist,
wobei die Grundschicht eine Trockenfilmschichtdicke von 3 bis 4 µm aufweist, und
wobei die Deckschicht eine Trockenfilmschichtdicke von 3 bis 4 µm aufweist,
wobei die Grundschicht 10 bis 100 Gew.-%, bezogen auf das Gewicht der eingebrannten Grundschicht, eines thermoplastischen Kunststoffs mit einer Temperaturbeständigkeit von über 200 °C enthält,
wobei die Deckschicht einen thermoplastischen Kunststoff mit einer Temperaturbeständigkeit von über 200 °C und optional ein Silikonharz enthält,
und wobei die Grundschicht und die Deckschicht frei von per- und polyfluorierten Alkylverbindungen sind,
wobei der in der Grund- und Deckschicht enthaltene thermoplastische Kunststoff unabhängig ausgewählt ist aus der Gruppe bestehend aus Polyethersulfon (PES), Polyphenylenethersulfon (PPSU), flüssig kristallinem Polymer (LCP), Polyaryletherketon, Polyetherketon (PEK), Polyetheretherketon (PEEK), Polyetherketonketon (PEKK), Polyphenylensulfid (PPS) und Mischungen derselben,
wobei die Deckschicht einen Gehalt an thermoplastischem Kunststoff von mindestens 30 Gew.-%, bezogen auf das Gewicht der eingebrannten Deckschicht, sowie mindestens 2.5 Gew.-%, bezogen auf das Gewicht der eingebrannten Deckschicht, eines Silikonöls aufweist, **dadurch gekennzeichnet, dass** die zu bildende Grundschicht als flüssiger Lack auf die Oberfläche des Artikels aufgebracht und anschliessend bei 250 bis 440 °C getrocknet wird, und dass anschliessend die Deckschicht als flüssiger Lack auf die vorgetrocknete Grundschicht aufgebracht wird und die Schichten durch anschliessende Wärmebehandlung bei 250 bis 440°C miteinander und mit der Oberfläche des Gegenstandes verbunden werden, wobei die zur Bildung der Grund- und Deckschicht verwendeten Lacke durch ein Bandbeschichtungsverfahren aufgebracht werden und wobei die Antihaftbeschichtung nach dem Einbrennen durch Tiefziehen umgeformt wird.

2. Verfahren nach Anspruch 1, wobei das in der Deckschicht enthaltene Silikonöl eine kinematische Viskosität bei 20 °C von mindestens 100 mm²s⁻¹ aufweist.

3. Verfahren nach Anspruch 1 oder 2, wobei die Deckschicht zusätzlich 1 bis 67.5 Gew.-%, bezogen auf das Gewicht der eingebrannten Deckschicht, an Silikonharz enthält.

4. Verfahren nach Anspruch 3, wobei das Silikonharz ein Methylsilikonharz und/oder Phenylsilikonharz und/oder ein Methyl-Phenylsilikonharz ist.

5. Verfahren nach einem der vorhergehenden Ansprüche, wobei der in der Grund- und Deckschicht enthaltene thermoplastische Kunststoff Polyethersulfon (PES) ist.

6. Verfahren nach einem der vorhergehenden Ansprüche, wobei die Grundschicht und/oder die Deckschicht mindestens einen Zusatz enthält, welcher ausgewählt ist aus der Gruppe bestehend aus Pigmenten, Füllstoffen und metallischen Partikeln.

7. Verfahren nach einem der vorhergehenden Ansprüche, wobei die Deckschicht einen anderen thermoplastischen Kunststoff als die Grundschicht enthält.

8. Verfahren nach einem der vorhergehenden Ansprüche, **dadurch gekennzeichnet, dass** der zur Bildung der Grundschicht oder der Deckschicht verwendete Lack den thermoplastischen Kunststoff in Form einer Dispersion enthält.

9. Verfahren nach einem der vorhergehenden Ansprüche, **dadurch gekennzeichnet, dass** der zur Bildung der Grundschicht oder der Deckschicht verwendete Lack den thermoplastischen Kunststoff in gelöster Form enthält.

10. Verfahren nach einem der vorhergehenden Ansprüche, **dadurch gekennzeichnet, dass** die Oberfläche des Artikels metallisch ist.

## Claims

1. A method for applying a non-stick coating for an article, wherein the non-stick coating comprises at least a base layer (G) burnt onto a surface (O) of the article and a covering layer (D) burnt above the base layer,
wherein the base layer has a dry film thickness of 3 to 4 µm, and wherein the covering layer has a dry film thickness of 3 to 4 µm,
wherein the base layer contains 10 to 100 wt.-%, related to the weight of the burnt base layer, of a thermoplastic resin having a temperature resistance exceeding 200°C,
wherein the covering layer contains a thermoplastic resin having a temperature resistance exceeding 200°C and optionally a silicone resin,
and wherein the base layer and the covering layer are free of perfluorinated and polyfluorinated alkyl compounds,
wherein the thermoplastic resin contained in the base layer and in the covering layer, respectively, is independently selected from the group consisting of polyethersulfone (PES), polyphenylene ether sulfone (PPSU), liquid crystalline polymer (LCP), polyarylether ketone, polyether ketone (PEK), polyether ether ketone (PEEK), polyether ketone ketone (PEKK), polyphenylene sulfide (PPS) and mixtures thereof
wherein the covering layer comprises a content of thermoplastic resin of at least 30 wt.-%, related to the weight of the burnt covering layer, and of at least 2.5 wt.-%, related to the weight of the burnt covering layer, of a silicone oil,
**characterized in that** the base layer to be formed is applied as a liquid varnish onto the surface of the article and subsequently dried at 250 to 440°C, and that subsequently the covering layer is applied as liquid varnish onto the predried base layer and the layers are bonded to each other and to the surface of the article by means of subsequent heat treatment at 250 to 440°C, wherein the varnishes used to form the base layer and the covering layer are applied by means of a coil coating process and wherein the non-stick coating is subjected to a forming process by means of deep drawing after the heat treatment.

2. The method according to claim 1, wherein the silicone oil contained in the covering layer has a kinematic viscosity at 20°C of at least 100 mm²s⁻¹.

3. The method according to claim 1 or 2, wherein the covering layer additionally contains 1 to 67.5 wt.-%, related to the weight of the burnt covering layer, of a silicone resin.

4. The method according to claim 3, wherein the silicone resin is a methyl silicone resin and/or a phenyl silicone resin and/or a methyl phenyl silicone resin.

5. The method according to one of the preceding claims, wherein the thermoplastic resin contained in the base layer and in the covering layer, respectively, is polyethersulfone (PES).

6. The method according to one of the preceding claims, wherein the base layer and/or the covering layer contains at least one additive selected from the group consisting of pigments, fillers and metallic particles.

7. The method according to one of the preceding claims, wherein the covering layer contains a different thermoplastic resin than the base layer.

8. The method according to one of the preceding claims, **characterized in that** the varnish used to form the base layer or the covering layer contains the thermoplastic resin in the form of a dispersion.

9. The method according to one of the preceding claims, **characterized in that** the varnish used to form the base layer or the covering layer contains the thermoplastic resin in dissolved form.

10. The method according to one of the preceding claims, **characterized in that** the surface of the article is metallic.

## Revendications

1. Procédé d'application d'un revêtement antiadhésif pour un article, ce revêtement antiadhésif comprenant au moins une couche de base (G) cuite au four sur la surface (O) de l'article et une couche de couverture (D) cuite au four sur la couche de base,
la couche de base ayant une épaisseur de couche de film sec de 3 à 4 µm, et la couche de couverture ayant une épaisseur de couche de film sec de 3 à 4 µm,
la couche de base contenant entre 10 et 100% pondéraux par rapport au poids de la couche de base cuite au four, d'une matière thermoplastique avec une tenue en température supérieure à 200°C,
la couche de couverture contenant une matière thermoplastique avec une tenue en température supérieure à 200°C et en option une résine de silicone, et
dans lequel la couche de base et la couche de couverture ne comportent pas de liaison alkyl per ou polyfluorée,
la matière thermoplastique contenue dans la couche de base et la couche de couverture étant choisie indépendamment dans le groupe comprenant : polyéthersulfone (PES), polyphényléther sulfone (PPSU), polymère cristallin liquide (LCP), polyaryléthercétone, polyéthercétone (PEK), polyétheréthercétone (PEEK), polyéthercétonecétone (PEKK), polysulfure de phenylène (PPS) et leur mélanges,
la couche de couverture ayant une teneur en matière thermoplastique d'au moins 30% pondéraux par rapport au poids de la couche de couverture cuite au four et au moins 2,5%, pondéraux par rapport au poids de la couche de couverture cuite au four, d'huile de silicone,
**caractérisé en ce que** la couche de base à former est appliquée à l'état de vernis liquide à la surface de l'article et ensuite elle est séchée à une température de 250 à 440°C, et ensuite on applique la couche de couverture comme vernis liquide sur la couche de base préalablement séchée et on relie entre elles les couches par un traitement thermique consécutif à 250-440°C l'une avec l'autre et avec la surface de l'objet, les vernis utilisés pour former la couche de base et la couche de couverture étant appliqués par un procédé de revêtement à la bande et le revêtement antiadhésif étant transformé par emboutissage profond après sa cuisson au four.

2. Procédé selon la revendication 1, dans lequel l'huile de silicone contenue dans la couche de couverture a une viscosité cinématique à 20°C d'au moins 100 mm² s⁻¹

3. Procédé selon la revendication 1 ou 2, dans lequel la couche de couverture contient en plus entre 1 et 67,5 % pondéraux de résine de silicone rapportés au poids de la couche de couverture cuite au four.

4. Procédé selon la revendication 3, dans lequel la résine de silicone est une résine de méthylsilicone et/ou de phénylsilicone et/ou de méthylphénylsilicone.

5. Procédé selon l'une des revendications précédentes, dans lequel la matière thermoplastique contenue dans la couche de base et la couche de couverture est du polyéthersulfone (PES).

6. Procédé selon l'une des revendications précédentes, dans lequel la couche de base et/ou la couche de couverture contiennent au moins un additif choisi dans le groupe comprenant: pigments, charges et particules métalliques.

7. Procédé selon l'une des revendications précédentes, dans lequel la couche de couverture contient une autre matière thermoplastique que la couche de base.

8. Procédé selon l'une des revendications précédentes, **caractérisé en ce que** le vernis utilisé pour former la couche de base ou la couche de couverture contient la matière thermoplastique sous la forme d'une dispersion.

9. Procédé selon l'une des revendications précédentes, **caractérisé en ce que** le vernis utilisé pour la couche de base ou la couche de couverture contient la matière thermoplastique à l'état dissout.

10. Procédé selon l'une des revendications précédentes, **caractérisé en ce que** la surface de l'article est métallique.
